# EUROPÄISCHE PATENTSCHRIFT

(11) **EP 2 819 774 B1**
(45) Veröffentlichungstag und Bekanntmachung des Hinweises auf die Patenterteilung: **24.02.2016**
(21) Anmeldenummer: 13709317.5
(22) Anmeldetag: 01.03.2013
(51) Int. Cl.: B01F 7/00, B01F 15/00

(54) **VORRICHTUNG ZUM MISCHEN MINDESTENS ZWEIER FLUIDER KOMPONENTEN, DREHANGETRIEBENER MISCHEREINSATZ DAFÜR UND SYSTEM AUS BEIDEM**
DEVICE FOR MIXING AT LEAST TWO FLUID COMPONENTS, ROTARY-DRIVEN MIXER INSERT THEREFOR, AND SYSTEM OF THE TWO
DISPOSITIF PERMETTANT DE MÉLANGER AU MOINS DEUX COMPOSANTS FLUIDES, ORGANE ROTATIF AMOVIBLE POUR MÉLANGEURS, ET SYSTÈME FORMÉ PAR CES DEUX ÉLÉMENTS

(30) Priorität: 02.03.2012 DE 102012004056
(43) Veröffentlichungstag der Anmeldung: 07.01.2015
(73) Patentinhaber: Tartler, Udo, 64750 Lützelbach/Haingrund (DE)
(72) Erfinder: Tartler, Udo, 64750 Lützelbach/Haingrund (DE)
(74) Vertreter: Maiwald Patentanwalts GmbH
(86) Internationale Anmeldenummer: PCT/EP2013/000601
(87) Internationale Veröffentlichungsnummer: WO 2013/127534

(56) Entgegenhaltungen:
- EP-A1- 0 087 029
- EP-A2- 1 149 627
- DE-C1- 4 235 736

## Beschreibung

Die vorliegende Erfindung betrifft eine Vorrichtung zum Mischen mindestens zweier fluider Komponenten sowie einen Mischereinsatz für eine solche Vorrichtung sowie ein System aus einer solchen Vorrichtung und einem solchen Mischereinsatz. Genauer betrifft die vorliegende Erfindung dabei einen Mischereinsatz mit einem Trägerstabelement und mindestens einem Verwirbelungselement und einer Drehantrieb-Verbindungsstruktur, wobei der Mischereinsatz zum Einsatz in ein rohrförmiges Durchleitungselement und zusammen mit diesem an eine Vorrichtung zum Mischen mindestens zweier fluider Komponenten angepasst ist, mittels der Drehantrieb-Verbindungsstruktur mit einer Antriebswelle der Vorrichtung in Antriebsverbindung setzbar zu sein, wenn der Mischereinsatz in das Durchleitungselement eingesetzt ist und das Durchleitungselement in fluiddichte Leitungsverbindung mit mindestens zwei Komponenten-Zuleitungen der Vorrichtung gesetzt ist; sowie eine solche Vorrichtung zum Mischen mindestens zweier fluider Komponenten mit mindestens zwei Komponenten-Zuleitungen und einem Drehantrieb mit einer Antriebswelle, wobei die Vorrichtung angepasst ist, ein rohrförmiges Durchleitungselement in fluiddichte Leitungsverbindung mit den Komponenten-Zuleitungen zu setzen, und mittels einer Drehantrieb-Verbindungsstruktur eines Mischereinsatzes, der ein Trägerstabelement und mindestens ein Verwirbelungselement aufweist und der zum Einsatz in das Durchleitungselement angepasst ist, mit dem Mischereinsatz in Drehantriebsverbindung zu setzen, wenn der Mischereinsatz in das Durchleitungselement eingesetzt ist und das Durchleitungselement in die Leitungsverbindung mit den Komponenten-Zuleitungen gesetzt ist.

Zum Herstellen von Kunststoff zum Beispiel etwa vor dem Einleiten von Kunststoff in den Anguss einer Gussform werden bei einigen Kunststoffen mindestens zwei fluide Komponenten so mit einander vermischt, dass sich das entstandene insbesondere flüssige oder pastöse Gemisch vernetzt und (gegebenenfalls in der Gussform) "aushärtet". Das Einleiten in die Gussform oder zum Beispiel auch das Aufbringen auf ein Fasergelege oder -gewebe zum Herstellen von GFK oder CFK erfolgt verbreitet durch ein rohrförmige Durchleitung (Mischer) mit Formelementen (Verwirbelungselementen) in ihrem Innenraum, die hindurchströmendes Fluid verschiedentlich um-, ablenken, lokal stauen, Turbulenzen erzeugen und/oder verwirbeln und somit durchmischen. In diesen Mischer hinein führen bekanntlich Zuleitungen insbesondere in der Anzahl der fluiden Komponenten, aus denen der Kunststoff zusammenzumischen ist.

So kann das Vermischen der Komponenten so spät wie möglich zum Beispiel vor dem Einleiten in die Gussform oder dem Aufbringen auf das Gelege oder Gewebe gewährleistet. Dies ermöglicht zum Beispiel auch die Verwendung von Kunststoff mit kurzer "Topfzeit", Kunststoff also, der schon kurze Zeit nach dem Vermischen vernetzt und dadurch schnell an Fließfähigkeit (Viskosität) verliert, die er zum Beispiel braucht, um die Gussform vollständig auszufüllen oder das Gelege oder Gewebe vollständig zu durchtränken.

Zum möglichst gleichmäßigen, vollständigen Durchmischen der Komponenten hat es sich als vorteilhaft erwiesen und durchgesetzt, die Verwirbelungselemente in der rohrförmigen Durchleitung drehend auszugestalten.

Bekannte Vorrichtungen zum Mischen mindestens zweier fluider Komponenten haben dann mindestens zwei Komponenten-Zuleitungen und einem Drehantrieb mit einer Antriebswelle. Die Vorrichtung ist dann angepasst, ein rohrförmiges Durchleitungselement in fluiddichte Leitungsverbindung mit den Komponenten-Zuleitungen zu setzen, und mittels einer Drehantrieb-Verbindungsstruktur eines Mischereinsatzes (der ein Trägerstabelement mit mindestens einem Verwirbelungselement aufweist und der zum Einsatz in das Durchleitungselement angepasst ist) mit dem Mischereinsatz in Drehantriebsverbindung zu setzen, wenn der Mischereinsatz in das Durchleitungselement eingesetzt und das Durchleitungselement in die Leitungsverbindung mit den Komponenten-Zuleitungen gesetzt ist. Eine solche Drehantrieb-Verbindungsstruktur an bekannten Mischereinsätzen ist in aller Regel eine im Wesentlichen radial zur Drehachse liegende Öffnung, in die ein Haken am Ende der Antriebswelle eingehakt wird, um die Antriebsverbindung herzustellen. Mischereinsatz und Durchleitungselement können (auch erfindungsgemäß) Einmal- oder Wegwerfartikel sein.

Das Dokument EP-A-1149627 offenbart einen Mischereinsatz nach dem Oberbegriff des Anspruchs 1 und eine Vorrichtung nach dem Oberbegriff des Anspruchs 2.

Der vorliegenden Erfindung liegt die Aufgabe zu Grunde, eine Mischvorrichtung mit Drehantrieb zu schaffen und einen Mischereinsatz dafür sowie auch ein System aus beidem, deren Handhabung vereinfacht ist.

Diese Aufgabe wird von einem Mischereinsatz mit den Merkmalen des Anspruchs 1 ode rvon einer Vorrichtung zum Mischen mit den Merkmalen des Anspruchs 2 oder von einem System mit den Merkmalen des Anspruchs 2 gelöst. Bevorzugte Ausgestaltungen sind in den Unteransprüchen angegeben.

Ein erfindungsgemäßer Mischereinsatz weist ein Trägerstabelement mit mindestens einem Verwirbelungselement auf. Vorzugsweise ist das Trägerstabelement länglich und/oder gerade, insbesondere zylindrisch. Und vorzugsweise sind mehrere Verwirbelungselemente um das vorzugsweise längliche Trägerstabelement herum angeordnet. Der erfindungsgemäße Mischereinsatz ist zum Einsatz in ein rohrförmiges Durchleitungselement einer Mischvorrichtung angepasst, die mit mindestens zwei Komponenten-Zuleitungen in irgendeiner mittelbaren oder unmittelbaren Leitungsverbindung steht. Durch die Komponenten-Zuleitungen lassen sich jeweils eine fluide Komponente in die rohrförmige Durchleitung ein- und dann durch diese hindurch leiten. Der erfindungsgemäße Mischereinsatz ist zum Beispiel so angepasst, dass er mindestens einen (von den Komponenten durchflossenen) Querschnitt der Durchleitung mit seinen Verwirbelungselementen durchkreuzt oder er mit seinen Verwirbelungselementen in mindestens einen solchen Querschnitt der Durchleitung hineinragt, wenn er in diesen eingesetzt ist. Die dort hindurch strömenden Fluide werden dann strömungsmechanisch zum Beispiel um- und/oder ablenkt, lokal gestaut, Turbulenzen werden in ihnen erzeugt und/oder sie werden verwirbelt - und somit durchmischt. Das Trägerstabelement dient dabei vorzugsweise ausschließlich dazu, die Verwirbelungselemente zu dem einem Bauteil des Mischereinsatzes zu vereinen, es muss also erfindungsgemäß nicht unbedingt "Stab"-förmig sein, geschweige denn zylindrisch. In Bereichen, wo die Verwirbelungselemente direkt aneinandergrenzen, muss ein Trägerstabelement nicht einmal überhaupt erkennbar sein, weil die Verwirbelungselemente selbst direkt in einander übergehen können. So ist der Begriff "Trägerstabelement" erfindungsgemäß im allerweitesten Sinne zu verstehen als irgendein Verbindungselement (oder irgendwelche Verbindungselemente) auch zur Drehbewegungsübertragung zwischen den Verwirbelungselementen.

Fluide im erfindungsgemäßen Sinne bedeutet übrigens fließfähiges Material im allerweitesten Sinne, also nicht nur flüssig und/oder gasförmig, sondern auch körnig wie zum Beispiel Sand oder sogar ein in Korngröße und/oder -material inhomogenes Gemisch. Auch äußerst hochviskose "pastöse" Flüssigkeiten sind Fluide im erfindungsgemäßen Sinne. Denn auch dafür sind Vorrichtungen technisch verfügbar und mit der Erfindung einsetzbar, die (zum Beispiel durch geeignet hohen Druck) hochviskose Fluidströmung erzeugen. Auch ist es im erfindungsgemäßen Sinne, mit dem Mischereinsatz Fluide nicht nur aus unterschiedlichem Material zu mischen. Sondern die mindestens zwei Komponenten können auch Paarungen beliebig verschiedener der hier umschriebenen Fluidbeschaffenheiten sein, also nur zum Beispiel eine flüssige und eine körnige Komponente. Auch wird daraus deutlich, dass der erfindungsgemäße Mischereinsatz keineswegs nur zum Mischen von Komponenten zum Herstellen von Kunststoff verwendbar ist, sondern zum Mischen jeglicher der hier umschriebenen Fluidarten zu einem beliebigen technischen Zweck.

Der erfindungsgemäße Mischereinsatz ist zudem angepasst, an einen Drehantrieb der Mischvorrichtung ansetzbar zu sein. Dazu weist der Mischereinsatz eine Drehantrieb-Verbindungsstruktur auf. Der Mischereinsatz ist dann (zusammen mit einem rohrförmigen Durchleitungselement) an die Vorrichtung angepasst, nämlich mittels der Drehantrieb-Verbindungsstruktur mit einer Antriebswelle einer Drehantriebsvorrichtung der Vorrichtung zum Mischen in Antriebsverbindung setzbar zu sein, wenn der Mischereinsatz in das Durchleitungselement eingesetzt und das Durchleitungselement in fluiddichte Leitungsverbindung mit mindestens zwei Komponenten-Zuleitungen der Vorrichtung gesetzt ist. Der Mischereinsatz ist dann in dem Durchleitungselement drehbar und mittels der Antriebswelle drehangetrieben.

Die erfindungsgemäße Vorrichtung zum Mischen wiederum ist an den Einsatz eines soweit beschriebenen Mischereinsatzes auch unter Verwendung eines soweit beschriebenen rohrförmigen Durchleitungselements angepasst, um mittels der Vorrichtung mindestens zwei Fluidkomponenten zu mischen.

Erfindungsgemäß weist die Drehantrieb-Verbindungsstruktur des erfindungsgemäßen Mischereinsatzes eine Bohrung auf mit einer Bohrungswandung, die an ein Gewinde auf der Antriebswelle der Vorrichtung zum Mischen so angepasst sind, dass die Bohrung zum Herstellen der Antriebsverbindung auf das Gewinde schraubbar ist, wobei die Bohrungswandung von dem Gewinde verformt wird.

Die erfindungsgemäße Vorrichtung zum Mischen wiederum weist erfindungsgemäß auf ihrer Antriebswelle ein Gewinde auf, das an die Drehantrieb-Verbindungsstruktur eines Mischereinsatzes in Form einer Bohrung mit einer Bohrungswandung so angepasst ist, dass das Gewinde zum Herstellen der Antriebsverbindung in die Bohrung schraubbar ist, wobei das Gewinde die Bohrungswandung verformt.

Die Bohrungsachse liegt dabei (mindestens im Wesentlichen) in Richtung der bestimmungsgemäßen Drehachse des Mischereinsatzes. Das Gewinde ist vorzugsweise konisch, zum Beispiel mit einem Außendurchmesser von 6 mm entsprechend diesem Durchmesser mindestens des Übergangs in die Antriebswelle und von 3 mm am Antriebswellenende, das in die Bohrung einzuschrauben ist. Diese beiden Durchmesser sind nur zum Beispiel 6 mm bis 10 mm voneinander entfernt. Die Gewindegänge sind vorzugsweise so angepasst insbesondere bezüglich ihres Querschnitts, aber auch in der Gewindetiefe und/oder Steigung, dass das Gewinde sich in die Bohrungswandung eindrückt und/oder einprägt und/oder einpresst - besonders bevorzugt aber, ohne dabei zu spanen, also insbesondere vom Werkstoff der Bohrungswandung einen Span abzuformen.

Das Gewinde ist vorzugsweise wie die Welle im Übrigen aus Metall, zum Beispiel aus nichtrostendem Stahl, die Bohrungswandung und insbesondere der gesamte Mischereinsatz zum Beispiel aus Polyoximethylen (POM), aber auch aus anderen Kunststoffen, die zur bevorzugten Herstellung des Mischereinsatzes im Spritzguss geeignet sind. Nur zum Beispiel mittels 2 bis 3 Umdrehungen lässt sich so das Gewinde erfindungsgemäß in die Bohrung schrauben - entweder bis, aber auch ohne dass das Gewindeende schließlich an einen Grund der Bohrung anstößt. Gewinde und Drehantrieb der Vorrichtung zum Mischen sind vorzugsweise so aufeinander abgestimmt, dass das Einschrauben des Gewindes in die Bohrung in der selben Drehrichtung erfolgt wie die Drehrichtung, in der der Drehantrieb den Mischereinsatz antreibt.

Die Handhabung, welche dieses erfindungsgemäße Produkt ermöglicht, beschleunigt nicht nur das Montieren und insbesondere auch das Demontieren des Mischereinsatzes (und des Durchleitungselements) von Hand. Eine erfindungsgemäße Mischvorrichtung mit einem erfindungsgemäßen Mischereinsatz lässt sich auch insbesondere ohne aufwendige zusätzliche Werkzeugwechselapparaturen robotisch und CNC gesteuert handhaben. Denn die Montage erfordert vorteilhaft nur ein fluchtendes Ausrichten der Achsen der Antriebswelle und der Bohrung und dann ein Drehantreiben in die Einschraubrichtung mit der Anzahl der zum Einschrauben erforderlichen Umdrehungen. Und die Demontage erfordert vorteilhaft ebenfalls nur umgekehrt ein Drehantreiben gegen die Einschraubrichtung mit derselben Anzahl der zum Einschrauben erforderlichen Umdrehungen (oder in diesem Fall sogar beliebig mehr Umdrehungen). So wird zusätzlich vorteilhaft möglicherweise um den Mischereinsatz schon härter gewordener Kunststoff einfach "weggesprengt" oder abgerissen. Als Einmal- oder Wegwerfteile lassen sich Mischereinsatz und Durchleitungselement dann schnell entsorgen.

Der erfindungsgemäße Mischereinsatz kann mindestens einen Abschnitt des Trägerstabelements (vorzugsweise einen Längsabschnitt in einer länglichen Erstreckungsrichtung des Mischereinsatzes oder des Trägerstabelements) ohne Verwirbelungselemente aufweisen. Dies hat sich als besonders wirkungsvoll für die Durchmischung der Komponenten herausgestellt. Es erlaubt vorteilhaft, die Strecke, auf der die Komponenten in der Durchleitung der Mischvorrichtung insbesondere entlang dem Mischereinsatz vermischt werden, bei gleichem Mischwirkungsgrad zu verkürzen, und somit auch den Mischereinsatz, was vorteilhaft zum Beispiel zu Bauraumeinsparung in der Mischvorrichtung und Materialeinsparung bei der Herstellung des Mischereinsatzes führen darf.

Vorzugsweise weist der erfindungsgemäße Mischereinsatz mindestens ein Verwirbelungselement auf, das als Fluid-Leitschaufel ausgebildet ist. Diese ist dann vorzugsweise so geformt und/oder ausgerichtet, dass sie auf die Strömungsrichtung von vorbeiströmendem Fluid so einwirkt, dass mindestens ein Strömungsfaden spiralförmig am Trägerstabelement entlang oder um das Trägerstabelement herum fließt.

Vorzugsweise grenzen beim erfindungsgemäßen Mischereinsatz (insbesondere in einer axialen Richtung des Trägerstabelements) an zwei einander gegenüber liegende Seiten eines Abschnitts ohne Leitschaufeln je ein Abschnitt mit Leitschaufeln an, die ausgerichtet sind, Fluid spiralförmig in zueinander entgegengesetzter Drehrichtung am Trägerstabelement entlang zu leiten. Solche zwei Abschnitte mit Leitschaufeln können am erfindungsgemäßen Mischereinsatz auch (ohne einen leitschaufelfreien Abschnitt dazwischen) direkt aneinandergrenzen.

Vorzugsweise ist der erfindungsgemäße Mischereinsatz ausgebildet mit mindestens einem Abschnitt mit Verwirbelungselementen, der mindestens zwei Verwirbelungselemente aufweist, die von dem Trägerstabelement vorspringend gleichmäßig auf einem Umfang um das Trägerstabelement herum verteilt sind. Sind dies Leitschaufeln, die ausgerichtet sind, Fluid spiralförmig am Trägerstabelement entlang zu leiten, können diese mindestens zwei Leitschaufeln auf die Strömung in dieselbe spiralförmige Richtung einwirken oder in verschiedene.

Diese und weitere Vorteile und Merkmale der Erfindung werden anhand der folgenden Abbildungen von Ausführungsbeispielen der Erfindung weiter beschrieben. Darin zeigen
- Fig. 1: eine räumliche Ansicht eines erfindungsgemäßen Mischereinsatzes,
- Fig. 2: eine Seitenansicht des Mischereinsatzes nach Fig. 1,
- Fig. 3: eine Seitenansicht des Mischereinsatzes nach Fig. 1 und 2, die gegenüber Fig. 2 um 90° um die Längsachse des Mischereinsatzes gedreht ist, und
- Fig. 4: eine teilweise geschnittene Ansicht, in der der erfindungsgemäße Mischereinsatz nach Fig. 1, 2, und 3 in eine Durchleitung einer erfindungsgemäßen Mischvorrichtung eingesetzt ist.

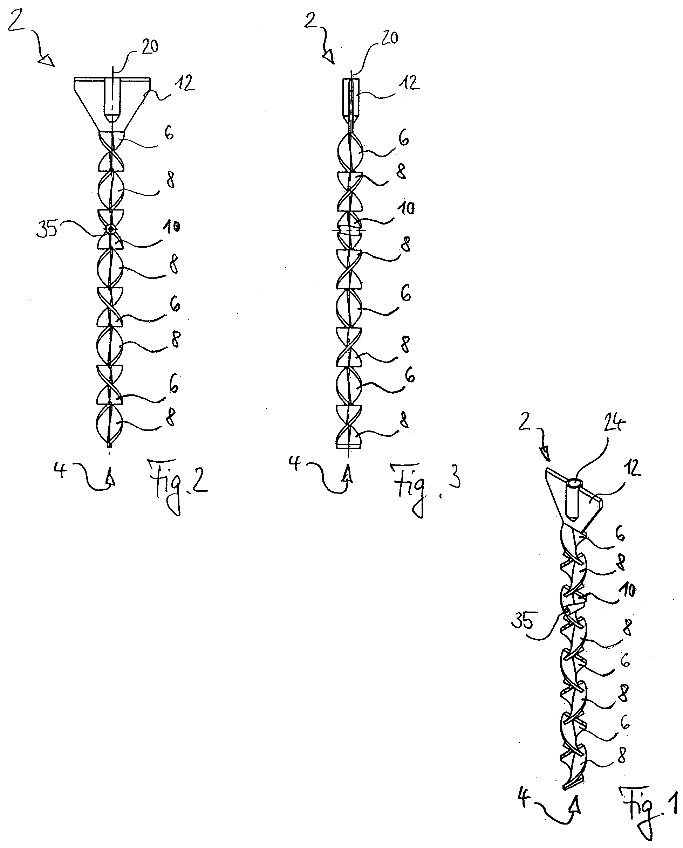

Fig. 1 bis 3 zeigen einen Mischereinsatz 2. Er weist ein Trägerstabelement 4 mit Verwirbelungselementen 6 bis 10 auf, die an dem Trägerstabelement 4 fest befestigt sind. Trägerstabelement 4 und Verwirbelungselemente 6 bis 10 sind einstückig im Spritzgussverfahren zum Beispiel aus POM hergestellt. Das Trägerstabelement 4 dient dabei dazu, die Verwirbelungselemente 6 bis 10 zu dem einem Bauteil des Mischereinsatzes 2 zu vereinen, es ist nicht eigentlich "Stab"-förmig. Das Trägerstabelement 4 ist als Körper nicht einmal überhaupt erkennbar, weil die Verwirbelungselemente 6 bis 10 selbst direkt in einander übergehen. So ist der Begriff "Trägerstabelement" als die Struktur 4 zu verstehen, die als Verbindung zur Drehbewegungsübertragung zwischen den Verwirbelungselementen 6 bis 10 dient.

Das Trägerstabelement ist länglich und gerade und um eine Rotationsachse 20 kreiszylindrisch.

Die Verwirbelungselemente 6 bis 10 sind um das Trägerstabelement 4 herum angeordnet und zwar in acht Abschnitten 6 bis 10 in axialer Richtung (entlang der Achse 20) des Trägerstabelements 4. Jeder der acht Abschnitte 6 bis 10 weist jeweils zwei Verwirbelungselemente auf, die von dem Trägerstabelement 4 paarweise vorspringend gleichmäßig auf dem jeweiligen Umfang um das Trägerstabelement herum verteilt sind (nämlich zueinander um 180° um die Achse 20 verdreht).

Die Verwirbelungselemente 6 bis 10 sind alle als Fluid-Leitschaufel ausgebildet. Sie sind also so geformt und ausgerichtet, dass sie auf die Strömungsrichtung von vorbeiströmendem Fluid leitend einwirken - und zwar im abgebildeten Beispiel so, dass Strömungsfäden (nicht dargestellt) von vorbeifließender Fluidströmung (nicht dargestellt) im Wesentlichen spiralförmig um die Rotationsachse 20 herum am Trägerstabelement 4 entlang geleitet würden.

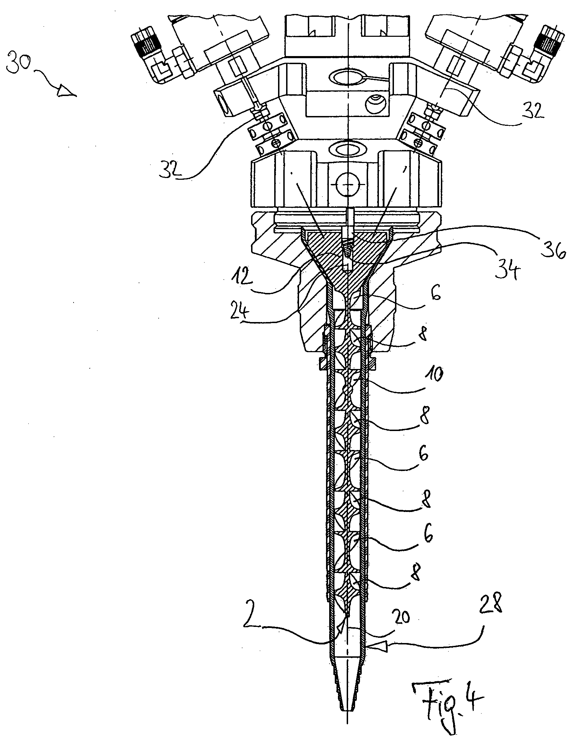

Wenn der Mischereinsatz 2 nicht (wie später zu Fig. 4 beschrieben) als drehangetriebener Mischer eingesetzt würde (sondern in einer Mischvorrichtung (nicht dargestellt) ortsfest befestigt wäre, an dem dann die zu mischenden Fluidkomponenten in der Erstreckungsrichtung des Trägerstabelements 4 vorbeiströmten), bewirkten die Leitschaufel-Elemente 6 bis 10 an der vorbeifließenden Fluidströmung der Komponenten in der eben beschriebenen Weise eine spiralförmige "Drallrichtung". Auf dieses spiralförmige Leiten bezieht sich auch im Folgenden der Begriff "Drallrichtung".

Erfindungsgemäß wird der Mischereinsatz 2 aber auch selbst in eine Drehbewegung versetzt - in der Mischvorrichtung 30 (Fig. 4) um die Erstreckungsrichtung des Trägerstabelements 4 - wobei die Verwirbelungselemente 6 bis 10 dann weniger wie soweit beschrieben als Leitelemente, sondern mehr als Schaufelelemente wirken, die die vorbeiströmenden Fluidkomponenten wie Turbinenschaufeln durchkämmen.

Die paarweise vom Trägerstabelement 4 vorspringenden Leitschaufel-Verwirbelungselemente jedes der acht Abschnitte 6 bis 10 sind jeweils beide so ausgerichtet, dass sie als Paar zusammen auf die Strömung in dieselbe spiralförmige Drallrichtung um die Rotationsachse 20 herum einwirken.

In Fig. 1 bis 3 jeweils von oben nach unten leitet das oberste Paar Leitschaufeln 6 von oben ankommende Strömung (nicht dargestellt) zunächst im oberen zur Achse 20 parallel verlaufenden leitschaufelartigen Abschnitt einer Drehantrieb-Verbindungsstruktur 12 geradeaus in Richtung der Achse 20. Dann etwas weiter unten schließen sich die Leitschaufeln 6 so an, dass sie als Paar zusammen auf die Strömung in dieselbe spiralförmige Drallrichtung (nämlich von oben in Fig. 1 bis 3 betrachtet gegen den Uhrzeigersinn) um die Rotationsachse 20 herum einzuwirken.

Unterhalb des obersten Paars Leitschaufeln 6 grenzen am Mischereinsatz 2 in Fig. 1 bis 3 jeweils von oben nach unten betrachtet Leitschaufelpaare 6 und 8 aneinander (jeweils zueinander um 90° um die Achse 20 verdreht), die so ausgerichtet sind, dass sie (wenn der Mischereinsatz 2 (wie später zu Fig. 4 beschrieben) als "statischer" Mischer eingesetzt wird) die in der Erstreckungsrichtung des Trägerstabelements 4 vorbeiströmenden Fluidkomponenten abwechselnd im Uhrzeigersinn (Leitschaufeln 8) oder gegen den Uhrzeigersinn (Leitschaufeln 6) spiralförmig um das Trägerstabelement 4 leiten würden.

Der Mischereinsatz 2 gemäß Fig. 1 bis 3 ist durch seine kreiszylindermantelförmige Außenkontur (die von den radialen Außenkonturen der Leitschaufelpaare 6 bis 10 gebildet wird) angepasst, gemäß Fig. 4 in eine kreiszylinderrohrförmige Durchleitung 28 einer Mischvorrichtung 30 einsetzbar zu sein, die mit zwei Komponenten-Zuleitungen (jeweils nur durch deren Mittellinien 32 stilisiert dargestellt) in Leitungsverbindung steht. Durch die Komponenten-Zuleitungen 32 lassen sich mittels jeweils einer Pumpe (nicht dargestellt) jeweils eine fluide Komponente in die rohrförmige Durchleitung ein- und dann durch diese hindurch leiten. Der Mischereinsatz 2 ist dabei so angepasst, dass er entlang seiner länglichen Erstreckungsrichtung in Richtung der Achse 20 im Abschnitt jeweils eines der Leitschaufelpaare 6 bis 10 jeweils einen (von den Komponenten durchflossenen) Querschnitt der Durchleitung mit seinen Verwirbelungselementen 6 bis 10 durchkreuzt (genauer gesagt durchquert - und mit diesen Verwirbelungselementen 6 bis 10 jeweils also auch in einen solchen Querschnitt der Durchleitung hineinragt). Die dort hindurch strömenden Fluide werden dann strömungsmechanisch um- und ablenkt, lokal gestaut, Turbulenzen werden in ihnen erzeugt und sie werden verwirbelt - und somit durchmischt.

In zwei 90° zur Längsachse 20 orientierten kleinen Öffnungen 35 radial nach außen im Leitschaufelpaar 10 können Metallelemente (nicht dargestellt) eingepresst sein, die entlang der Außenwand der rohrförmigen Durchleitung 28 mitrotieren und so durch Magnetabfrage eine Drehzahl- und/oder Rotationskontrolle ermöglichen.

Der Mischereinsatz 2 ist durch eine Bohrung 24 mit einer glatten, kreiszylindermantelflächenförmigen Bohrungswandung 24 außerdem auch angepasst, gemäß Fig. 4 in der Durchleitung an einen Drehantrieb 36 ansetzbar zu sein (nämlich auf ein Konusgewinde 34 am unteren Ende einer Antriebswelle 36 aufgeschraubt zu werden), der den Mischereinsatz 2 um die Rotationsachse 20 drehend antreibt. Die Gewindegänge des konischen Gewindes 34 sind insbesondere in ihrem Querschnitt, aber auch in der Gewindetiefe und Steigung so angepasst, dass das Gewinde 34 sich in die glatte Bohrungswandung eindrückt und einprägt und einpresst, ohne dabei zu spanen, also insbesondere vom Werkstoff der Bohrungswandung einen Span abzuformen. Dies dient dem Herstellen der Antriebsverbindung zwischen dem Drehantrieb 36 der Mischvorrichtung 30 und dem Mischereinsatz 2.

Der Drehantrieb ist also vorbereitet, den Mischereinsatz um eine Drehachse 20 anzutreiben, die in der länglichen Ersteckungsrichtung des Trägerstabelements 4 verläuft und in der Längsrichtung des Trägerstabelements in dem Trägerstabelement. Die Drehbewegung des Mischereinsatzes 2 in der Durchleitung verstärkt das Durchmischen zusätzlich. Während beim "statischen" Mischen (ohne Drehbewegung des Mischereinsatzes 2) die leitschaufelartigen Verwirbelungselemente 6 bis 10 die vorbeiströmenden Fluidkomponenten (nicht dargestellt) in der Erstreckungsrichtung des Trägerstabelements 4 im oder gegen den Uhrzeigersinn spiralförmig um das Trägerstabelement 4 leiten und insbesondere durch diesen Richtungswechsel verwirbeln, durchkämmen sie drehangetrieben als Schaufelelemente die vorbeiströmenden Fluidkomponenten wie Turbinenschaufeln. Je nach Neigungsrichtung ("im oder gegen den Uhrzeigersinn") "transportieren" sie dann durch Propellereffekt die Fluidkomponenten weiter in Fließrichtung durch die rohrförmige Durchleitung 28 - oder wirken als "stauende Elemente" "gegen die Fließrichtung. So entsteht die Vermischung an den Verwirbelungsschaufeln 6 bis 10 durch "Schieben" oder "Stauen".

Die Bohrungsachse 40 liegt in Richtung der bestimmungsgemäßen Drehachse 20 des Mischereinsatzes 2 und der Antriebswelle 36.

## Patentansprüche

1. Mischereinsatz (2) mit einem Trägerstabelement (4) und mindestens einem Verwirbelungselement und einer Drehantrieb-Verbindungsstruktur (12), wobei der Mischereinsatz (2) zum Einsatz in ein rohrförmiges Durchleitungselement (28) und zusammen mit diesem an eine Vorrichtung zum Mischen mindestens zweier fluider Komponenten angepasst ist, mittels der Drehantrieb-Verbindungsstruktur (12) mit einer Antriebswelle (36) der Vorrichtung in Antriebsverbindung setzbar zu sein, wenn der Mischereinsatz (2) in das Durchleitungselement (28) eingesetzt ist und das Durchleitungselement (28) in fluiddichte Leitungsverbindung mit mindestens zwei Komponenten-Zuleitungen (32) der Vorrichtung gesetzt ist, **dadurch gekennzeichnet, dass** die Drehantrieb-Verbindungsstruktur (12) eine Bohrung (24) aufweist mit einer Bohrungswandung, die an ein Gewinde auf der Antriebswelle (36) so angepasst sind, dass die Bohrung (24) zum Herstellen der Antriebsverbindung auf das Gewinde aufschraubbar ist, wobei die Bohrungswandung von dem Gewinde verformt wird,

2. Vorrichtung zum Mischen mindestens zweier fluider Komponenten mit mindestens zwei Komponenten-Zuleitungen (32) und einem Drehantrieb (36) mit einer Antriebswelle (36), wobei die Vorrichtung angepasst ist, ein rohrförmiges Durchleitungselement (28) in fluiddichte Leitungsverbindung mit den Komponenten-Zuleitungen (32) zu setzen, und mittels einer Drehantrieb-Verbindungsstruktur (12) eines Mischereinsatzes (2), der ein Trägerstabelement (4)und mindestens ein Verwirbelungselement aufweist und der zum Einsatz in das Durchleitungselement (28) angepasst ist, mit dem Mischereinsatz (2) in Drehantriebsverbindung zu setzen, wenn der Mischereinsatz (2) in das Durchleitungselement (28) eingesetzt ist und das Durchleitungselement (28) in die Leitungsverbindung mit den Komponenten-Zuleitungen (32) gesetzt ist, **dadurch gekennzeichnet, dass** die Antriebswelle (36) ein Gewinde aufweist, das an die Drehantrieb-Verbindungsstruktur (12) in Form einer Bohrung (24) mit einer Bohrungswandung so angepasst ist, dass das Gewinde zum Herstellen der Antriebsverbindung in die Bohrung (24) einschraubbar ist, wobei das Gewinde die Bohrungswandung verformt.

3. System aus der Vorrichtung und dem Mischereinsatz (2) nach den vorhergehenden Ansprüche.

4. Vorrichtung nach Anspruch 1 oder Mischereinsatz (2) nach Anspruch 2 oder System nach Anspruch 3, **dadurch gekennzeichnet, dass** das Gewinde konisch ist.

5. Vorrichtung nach einem der vorhergehenden Ansprüche, **dadurch gekennzeichnet, dass** das Gewinde angepasst ist, sich in die Bohrungswandung einzudrücken und/oder einzuprägen und/oder einzupressen.

6. Mischereinsatz (2) nach einem der vorhergehenden Ansprüche, **dadurch gekennzeichnet, dass** das Trägerstabelement (4)länglich und/oder gerade ist und/oder dass mehrere Verwirbelungselemente (6 bis 10) um das Trägerstabelement (4) herum angeordnet sind.

7. Mischereinsatz (2) nach Anspruch 6, **dadurch gekennzeichnet, dass** das Trägerstabelement (4)länglich ist und dass die Antriebswelle (36) angepasst ist, den Mischereinsatz (2) um eine Drehachse (20), die in der länglichen Ersteckungsrichtung des Trägerstabelements und/oder in Längsrichtung des Trägerstabelements in dem Trägerstabelement (4)verläuft, drehend anzutreiben.

8. Mischereinsatz (2) nach einem der vorhergehenden Ansprüche, **dadurch gekennzeichnet, dass** mindestens ein Verwirbelungselement eine Fluid-Leitschaufel ist, die ausgerichtet ist, Fluid spiralförmig um das Trägerstabelement (4) herum zu leiten.

9. Mischereinsatz (2) nach Anspruch 8, **dadurch gekennzeichnet, dass** in axialer Richtung des Trägerstabelements an einen Abschnitt ohne Leitschaufeln (6,8) zwei Abschnitte mit je mindestens einer Leitschaufel angrenzen, die ausgerichtet sind, Fluid spiralförmig in zueinander entgegengesetzter Richtung um das Trägerstabelement (4) herum zu leiten.

10. Mischereinsatz (2) nach Anspruch 8 oder 9, **dadurch gekennzeichnet, dass** in axialer Richtung des Trägerstabelements zwei Abschnitte mit je mindestens einer Leitschaufel direkt aneinandergrenzen, die ausgerichtet sind, Fluid spiralförmig in zueinander entgegengesetzter Richtung um das Trägerstabelement (4) herum zu leiten.

## Claims

1. A mixer insert (2) with a support rod element (4) and at least one vortexing element and a rotary-drive connection structure (12), wherein the mixer insert (2), for insertion into a tubular passage element (28), and together therewith, is adapted to a device for mixing at least two fluid components, by means of which the rotary-drive connection structure (12) can be placed in a drive connection (36) with a driveshaft of the device, when the mixer insert (2) is inserted into the passage element (28) and the passage element (28) is placed in fluid-tight connection (32) with at least two component feed lines of the device, **characterized in that** the rotary-drive connection structure (12) has a borehole (24) with a borehole wall, which are adapted to a thread on the driveshaft(36), such that the borehole (24) can be screwed onto the thread for producing the driving connection, wherein the borehole wall is shaped by the thread.

2. A device for mixing at least two fluid components with at least two component feed lines (32) and a rotary-drive (36) with a driveshaft (36), wherein the device is adapted to place a tubular passage element (28) in a fluid-tight connection (32) with the component feed lines, and by means of a rotary-drive connection structure (12) of a mixer insert (2), which has one support rod element (4) and at least one vortexing element (28) and which is adapted for insertion in the passage element, for placement with the mixer insert (2) into a rotary-drive connection, when the mixer insert (2) is inserted into the passage element (28) and the passage element (28) is placed in flow connection with the component feed lines (32), **characterized in that** the driveshaft (36) has a thread, which is adapted to the rotary-drive connecting structure (12) in the form of a borehole (24) with a wall, such that the thread can be screwed into the borehole (24) for producing the driving connection, wherein the borehole wall is shaped by the thread.

3. The system of the device and the mixer insert (2) according to the preceding claims.

4. The device according to claim 1 or the mixer insert (2) according to claim 2 or the system according to claim 3, **characterized in that** the thread is conical.

5. The device according to one of the preceding claims, **characterized in that** the thread is adapted for pushing into, imprinting and/or impressing the borehole wall.

6. The mixer insert (2) according to one of the preceding claims, **characterized in that** the support rod element (4) is longitudinal and/or straight at and/or that several vortexing elements (6 to 10) are disposed around the support rod element (4).

7. The mixer insert (2) according to claim 6, **characterized in that** the support rod element (4) is elongated and that the driveshaft (36) is adapted to drive the mixer insert (2) rotationally around an axis of rotation (20), which extends in the longitudinal direction of the support rod element and/or in the longitudinal direction of the support rod element in the support rod element (4).

8. The mixer insert (2) according to one of the preceding claims, **characterized in that** at least one of the vortexing elements is a fluid guide vane, which is aligned so as to guide the fluid spirally around the support rod element (4).

9. The mixer insert (2) according to claim 8, **characterized in that**, in the axial direction of the support rod element at a section without guide vanes (6, 8), two sections with at least one guide vane each adjoin, which are aligned for guiding fluid spirally in mutually opposite directions around the support rod element (4).

10. The mixer insert (2) according to claim 8 or 9, **characterized in that**, in the axial direction of the support rod element, two sections with at least one guide vane each adjoin one another directly and are aligned for guiding fluid spirally in mutually opposite directions around the support rod element (4).

## Revendications

1. Insert de mélangeur (2) avec un élément de tige de support (4) et au moins un élément de tourbillonnement et une structure de raccordement d'entraînement rotatif (12), dans lequel l'insert de mélangeur (2) est conçu pour être inséré dans un élément de transmission tubulaire (28) et, ensemble avec ce dernier, adapté sur un dispositif permettant de mélanger au moins deux composants fluides pour pouvoir être mis en liaison d'entraînement au moyen de la structure de raccordement d'entraînement rotatif (12) avec un arbre d'entraînement (36) du dispositif lorsque l'insert de mélangeur (2) est inséré dans l'élément de transmission (28) et l'élément de transmission (28) est mis en connexion par conduite étanche aux fluides avec au moins deux conduites d'alimentation de composants (32) du dispositif, **caractérisé en ce que** la structure de raccordement d'entraînement rotatif (12) comporte un alésage (24) avec une paroi d'alésage adaptée à un filetage sur l'arbre d'entraînement (36) de manière à ce que l'alésage (24) puisse être vissé sur le filetage afin de réaliser la liaison d'entraînement, la paroi d'alésage étant déformée par le filetage.

2. Dispositif permettant de mélanger au moins deux composants fluides avec au moins deux conduites d'alimentation de composants (32) et un entraînement rotatif (36) avec un arbre d'entraînement (36), dans lequel le dispositif est adapté de manière à mettre un élément de transmission tubulaire (28) en connexion par conduite étanche aux fluides avec les conduites d'alimentation de composants (32), et à le mettre, au moyen d'une structure de raccordement d'entraînement rotatif (12) d'un insert de mélangeur (2) comportant un élément de tige de support (4) et au moins un élément de tourbillonnement adapté pour être inséré dans l'élément de transmission (28), en liaison d'entraînement rotatif avec l'insert de mélangeur (2) lorsque l'insert de mélangeur (2) est inséré dans l'élément de transmission (28) et l'élément de transmission (28) est mis en connexion par conduite avec la conduite d'alimentation de composants (32), **caractérisé en ce que** l'arbre d'entraînement (36) comporte un filetage adapté à la structure de raccordement d'entraînement rotatif (12) sous la forme d'un alésage (24) avec une paroi d'alésage de manière à ce que le filetage puisse être vissé dans l'alésage (24) afin de réaliser la liaison d'entraînement, le filetage déformant la paroi d'alésage.

3. Système constitué du dispositif et de l'insert de mélangeur (2) selon les revendications précédentes.

4. Dispositif selon la revendication 1 ou insert de mélangeur (2) selon la revendication 2 ou système selon la revendication 3, **caractérisé en ce que** le filetage est conique.

5. Dispositif selon l'une quelconque des revendications précédentes, **caractérisé en ce que** le filetage est adapté de manière à s'enfoncer et/ou s'estamper et/ou se presser dans la paroi d'alésage.

6. Insert de mélangeur (2) selon l'une quelconque des revendications précédentes, **caractérisé en ce que** l'élément de tige de support (4) est oblong et/ou droit et/ou **en ce que** plusieurs éléments de tourbillonnement (6 à 10) sont disposés autour de l'élément de tige de support (4).

7. Insert de mélangeur (2) selon la revendication 6, **caractérisé en ce que** l'élément de tige de support (4) est oblong et **en ce que** l'arbre d'entraînement (36) est adapté de manière à entraîner en rotation l'insert de mélangeur (2) autour d'un axe de rotation (20) qui court dans le sens d'extension longitudinal de l'élément de tige de support et/ou dans le sens longitudinal de l'élément de tige de support dans l'élément de tige de support (4).

8. Insert de mélangeur (2) selon l'une quelconque des revendications précédentes, **caractérisé en ce que** au moins un élément de tourbillonnement est une pale directrice de fluide orientée de manière à diriger du fluide hélicoïdalement autour de l'élément de tige de support (4).

9. Insert de mélangeur (2) selon la revendication 8, **caractérisé en ce que** deux sections avec chaque fois au moins une pale directrice orientée de manière à diriger le fluide hélicoïdalement en sens opposé l'une par rapport à l'autre autour de l'élément de tige de support (4) aboutent dans un sens axial de l'élément de tige de support à une section sans pales directrices (6, 8).

10. Insert de mélangeur (2) selon la revendication 8 ou 9, **caractérisé en ce que** deux sections avec chaque fois au moins une pale directrice orientée de manière à diriger le fluide hélicoïdalement en sens opposé l'une par rapport à l'autre autour de l'élément de tige de support (4) sont directement contigus dans un sens axial de l'élément de tige de support.
